(19) Europäisches Patentamt

European Patent Office

Office européen des brevets

(11) EP 1 734 003 A2

(12) **EUROPEAN PATENT APPLICATION**

(43) Date of publication:
20.12.2006 Bulletin 2006/51

(51) Int Cl.:
*C01B 6/21* (2006.01)

(21) Application number: 06012258.7

(22) Date of filing: 14.06.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.06.2005 US 691222 P**
**07.06.2006 US 448021**

(71) Applicant: **Air Products and Chemicals, Inc.**
**Allentown, PA 18195-1501 (US)**

(72) Inventors:
• **IVANOV, Sergei Vladimirovich**
**Schnecksville, PA 18078 (US)**
• **CASAS, Baldomero**
**Emmaus, PA 18049 (US)**

(74) Representative: **Rögner, Jürgen**
**Patentanwälte Schwabe Sandmair Marx,**
**Stuntzstrasse 16**
**81677 München (DE)**

(54) **Method for producing dodecahydrododecaborates**

(57) The disclosure relates to the synthesis of salts of dodecahydrododecaborate B12H12 (2-), which comprises reacting
a) at least one Bronsted acid or Lewis acid
b) at least one tetrahydroborate selected from the class consisting of alkali metal tetrahydroborates and alkaline earth tetrahydroborates, and
c) at least one Lewis base selected from those of the formulas consisting of RO(CH2CH2O)R', R'SR', RR'R"N and RR'R"P.

PROCESS BLOCK DIAGRAM

Figure 1

Process block diagram for synthesis of B12H12 (2-) from sodium borohydride, triethylamine and hydrogen chloride.

**Description**

CROSS-REFERENCE TO RELATED APPLICATIONS

This Application claims benefit of U.S. Provisional Application No. 60/691,222, filed on June 16, 2005 and entitled "Method For Producting Dodecahydrododecaborates". The disclosure of this Provisional Application is hereby incorporated by reference.

The subject matter of the instant invention is related to U.S. Patent Application No._____, filed on even date herewith and entitled "Process For Producing Boranes"; the disclosure of which is hereby incorporated by reference.

BACKGROUND OF THE INVENTION

Methods are known in this art for making certain borate compounds. Previous methods for synthesis of dodecahydrododecaborates involve reactions of diborane with metal tetrahydroborates, or pyrolysis of borane complexes. US Patents Nos. 3,169,045, 3,265,737 and 3,328,134 disclose preparing $B_{12}H_{12}{}^{2-}$ by condensing diborane with tetrahydroborates in the pressure vessels: "A process for preparing alkali metal and alkaline earth metal dodecahydrododecaborates which comprises reacting

a) diborane
b) a tetrahydroborate selected from the class consisting of alkali metal tetrahydroborates and alkaline earth tetrahydroborates, and
c) a compound selected from those of the formulas consisting of RO(CH2CH2O)R', R'SR', RR'R"N and RR'R"P.....
at a temperature of at least 120C in the substantial absence of oxygen and water and a pressure of about one atmosphere"

Another group of methods comprises reacting various boranes with L.BH3 complexes. For example, U.S Patent No. 3,961,017 describes a process for the synthesis of $Na_2B_{12}H_{12}$ using diborane adduct, dimethylsulfideborane: "A process for preparing an alkali metal dodecahydrododecaborate which comprises reacting .... alkali metal hydride with dimethylsulfideborane...". Czech Patent No. 238254 provides a process based on thermal decomposition of borane-triethylamine complex in the presence of metal tetrahydroborates: " A process for preparing an alkali metal dodecahydrododecaborate which comprises reacting .... alkali metal hydride with triethylamine borane at 220-250 C..."

Reaction between NaH and NaBH4 with boron trichloride-hydrogen mixture in a mixed bed flow reactor was also proposed for synthesis of Na2B12H12, but in this system considerable amounts of undesirable by-products, chlorinated clusters, was also formed (Gruner, B. et al , Eur. J. Solid State Inorg. Chem., 1991, p. 597)

Other methods are disclosed in; Miller, H.C.; Muetterties, E. L. US Patent No. 3,355,261; Sivaev, I. B.; Bregadze, V.I.; Sjoberg, S. Collect. Czech. Chem. Commun., 2002, 679; Olmsted, P. B. US Patent 2,927,124;

The disclosure of all of the previously identified references is hereby incorporated by reference. Such incorporation shall not be an admission that these references are prior art against any claims appended hereto.

BRIEF SUMMARY OF THE INVENTION

The instant invention solves problems associated with conventional methods by providing a cost effective process for producing salts of B12H12 (2-). The instant invention also solves problems with conventional methods by employing a process that is substantially free of diboranes. By "substantially free" of diboranes it is meant that the reactants, isolated intermediates and products contain less than about 5 mol. % diborane (when measured in a gaseous phase) and normally less than about 1 mol.% diborane. The instant invention comprises a process for producing dodecahydrododecaborate salts (2-) from commercially available materials, such as alkali metal tetrahydroborates (e.g., sodium tetrahydroborate).

The inventive methods can produce borate containing compositions that can be used for making (B12FxY12-x)-2 including, without limitation, LiB12FxY12-x, where Y can be any combination of atoms or functional groups including, without limitation, hydrogen, chlorine, other halogens and OR groups, and any salts or precursors thereof and combinations containing LBF containing compositions (collectively referred to as "LBF"). For example, $B_{12}H_{12}$ (2-) salts can be used for making $Li_2B_{12}Cl_{12}$ and Li2B12F12-xHx. The LBF can be employed as a source of lithium in lithium batteries. Examples of methods for using the inventive borane compositions to produce LBF are disclosed in U.S. Patent Application Nos. US20050064288 A1 and US20050053841 A1; hereby incorporated by reference.

The instant invention can also produce amine-borane compositions. Amineboranes produced according to the method described in this invention can be used for synthesis of salts of dodecahydrododecaborate or for other applications, such as applications in pharmaceutical synthesis, as reducing reagent for metal plating, among other applications.

In one aspect of the present invention, salts of dodecahydrododecaborate, B12H122- are prepared by reacting at least one metal tetrahydroborate with at least one Bronsted or Lewis acid and at least one Lewis base to form salts of B12H12 (2-).

In one embodiment of the present invention, at least one metal tetrahydroborate salt is reacted with boroxines (e.g., at a temperature of about 120 to about 180 °C) to form salts of B12H12 (2-) and metal borates. In another embodiment of this aspect, sodium metal tetrahydroborate is reacted with boron trifluoride to form salts of B12H12 (2-) and sodium tetrafluoroborate, from which boron trifluoride can be recycled.

BRIEF DESCRIPTION OF SEVERAL VIEWS OF THE DRAWINGS

Figure 1 is a block diagram of a process in accordance with one aspect of the invention.
Figure 2 is a block diagram of a process in accordance with a second aspect of the invention.
Figure 3 is a block diagram of a process in accordance with a third aspect of the invention

DETAILED DESCRIPTION OF THE INVENTION

The present invention relates compositions and processes for producing dodecahydrododecaborate salts, wherein at least one metal tetrahydroborate salt is reacted with at least one Bronsted acid or Lewis acid while in the presence of Lewis base selected from those of the formulas consisting of RO(CH2CH2O)R', R'SR', RR'R"N and RR'R"P.

While any suitable metal salt can be employed in the present invention, examples of suitable metal tetrahydroborate salts comprise at least one alkali metal tetrahydroborate, selected from the group consisting of lithium tetrahydroborate, sodium tetrahydroborate and potassium tetrahydroborate, and alkali earth tetrahydroborate selcted from calcium tetrahydroborate, magnesium tetrahydroborate and combinations thereof.

While any suitable acid can be used in the present invention, Bronsted acids suitable for use in this invention comprise at least one substance capable of donating proton to another substance. Examples of Bronsted suitable acids comprise at least one member selected from the group consisting of hydrochloric acid, sulfuric acid, acetic acid, formic acid, boric acid, trialkylammonium hydrogen chloride, trialkylammonium hydrogen sulfate, and combinations thereof.

The ratio of metal tetrahydroborate to Bronsted acid in the inventive process can range between about 0.1 and about 10. In one aspect of the invention, the ratio of metal tetrahydroborate and Bronsted acid is selected so that the excess of metal is substantially removed by the anion formed during the reaction with Bronsted acid and substantially no free Bronsted acid is present in the mixture after the reaction is completed. For example, in the case where M comprises an alkali metal, and the Bronsted acid comprises HCl, the reaction can be operated when the ratio of metal hydride to Bronsted acid is about 12/10 according to the following equation:

$$12\ NaBH_4\ +\ 10\ HCl\ \rightarrow\ \ Na_2B_{12}H_{12} + 10\ NaCl + 13\ H_2$$

Although any suitable acid can be used in the present invention, Lewis acid suitable for use in this invention comprise at least one substance that acts as an electron pair acceptor. Examples of suitable Lewis acids comprise at least one member selected from the group consisting of aluminum trichloride, boron halides, carbon dioxide, boron esters, boron oxide, and mixtures of boron oxide with boron esters (e.g., boroxines) and combinations thereof. Desirable Lewis acids comprise boron halides and boroxines, such as boron trifluoride and boroxines.

In another aspect of the invention, the ratio of metal tetrahydroborate to Lewis acid can range between about 0.1 and about 10. The ratio of metal tetrahydroborate and Lewis acid can be selected so that the excess of metal is substantially removed by the anion formed during the reaction with Lewis acid and substantially no free Lewis acid is present in the mixture after the reaction is completed. For example, in the case where M comprises an alkali metal, and Lewis acid comprises BF3, the reaction can be operated when the ratio of metal hydride to Lewis acid is about 1/1 according to the following equation:

$$19\ NaBH_4\ +\ 20\ BF_3\ \rightarrow\ 2\ Na_2B_{12}H_{12} + 15\ NaBF_4 + 13\ H_2$$

However, if the Bronsted acid comprises BCl3 and one of the reaction by-products comprises NaCl, the reaction can be operated when the ratio of metal hydride to Bronsted acid is about 4.

$$19 \ NaBH_4 \ + \ 5 \ BCl_3 \ \rightarrow \ 2 \ Na_2B_{12}H_{12} + 15 \ NaCl + 13 \ H_2$$

At least one Lewis base can be used in the instant invention. A Lewis base used in this invention is defined as a substance that acts as an electron pair donor. Typical examples of Lewis bases used in this invention can comprise at least one ether type compounds of general formula RO(CH2CH2O)R', amines of general formula R'R''R'''N, alkyl sulfides of general formula R'SR" and phospines of general formula RR'R''P. Lewis base borane complexes may act as reaction intermediates or can be isolated from the reaction by-products and converted to salts of dodecahydrododecaborate under suitable conditions. Desirable Lewis bases comprise amines (e.g., aliphatic amines such as triethylamine). Lewis base to metal tetrahydroborate molar ratio is between 0.1 to 100.

In one aspect of this invention, at least one metal tetrahydroborate is treated (e.g., at a temperature of about -50 to about 150 °C) with at least one Bronsted acid in the presence of at least one Lewis base in order to obtain Lewis base borane complex. The Lewis base borane complex can then be thermally decomposed to form salts of B12H12 (2-). In one embodiment of this aspect, the Lewis base borane complex is not isolated from the reaction mixture to produce B12H12 (2-). For example, when metal tetrahydroborate, Bronsted acid and Lewis base are reacted in an organic solvent containing medium (e.g., in the absence of air and moisture), the Lewis base borane complex may not be separated from the reaction by-product between metal tetrahydroborate and Bronsted acid. In this aspect of the inventive method, at least one Lewis base, at least one Bronsted acid and at least one metal tetrahydroborate are mixed in at least one organic solvent and the reaction mixture is heated above about 100 °C to produce salts of B12H12 (2-). However, if separating Lewis base borane from the reaction intermediate (e.g., as an insoluble in the reaction solvent metal salt), is desirable (e.g., to improve agitation or to improve the reaction yield), then the Lewis base borane complex could be separated from the reaction mixture by any suitable separation methods, such as filtration, evaporation, extraction. The organic solvent for the solvent containing medium is selected from those substantially inert to all reagents and to the reaction products. Examples of suitable solvents comprise ether type solvents such as diethyl ether, 1,4-dioxane tetrahydrofuran, glyme, diglyme and triglyme.

In another aspect of the invention, when Lewis base, Bronsted acid and metal tetrahydroborate are reacted in an aqueous solution, separating Lewis base borane from aqueous solution is typically useful in the production of B12H12 (2-). Using an aqueous solution is especially useful when the Lewis base borane complex is immiscible with water. In this case Lewis base borane complex can be separated from the reaction intermediate, metal salt of Bronsted acid, by extraction. Bronsted acid and Lewis base may be reacted in a separate vessel to form an intermediate salt, which may also act as Bronsted acid, which can be further reacted with metal tetrahydroborate. For example, amine (Lewis Base) is reacted with hydrogen chloride (Bronsted acid) to form amine hydrogen chloride, which is further reacted with metal tetrahydroborate to form salts of B12H12 (2-).

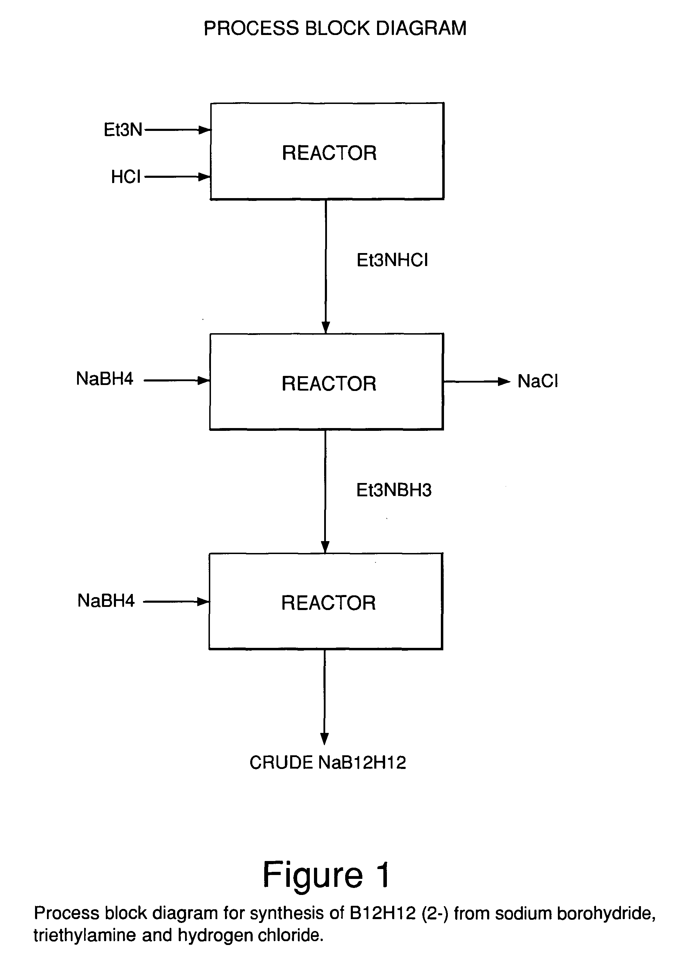

Certain aspects of the invention are illustrated by the drawings. Referring now to Figure 1, Triethyalmine, Et3N, is reacted with hydrogen chloride, HCl, to form triethylamine hydrogen chloride, Et3NHCl, which is reacted with sodium tetrahydroborate, NaBH4 to form an intermediate triethylamine borane, Et3NBH3, which is further reacted with sodium tetrahydroborate to produce sodium dodecahydrododecaborate, Na2B12H12. The reaction between triethylamine and hydrogen chloride can be conducted in the absence of solvent, in organic solvent or in the aqueous solution. The reaction between triethylamine chlroride and sodium tetrahydroborate can be conducted in the absence of solvent, in inert organic solvent or in water. When the reaction is conducted in water, an aqueous solution comprising triethylammonium chloride is treated with solid sodium tetrahydroborate or with aqueous solution of sodium tetrahydroborate. Triethylamine borane compex forms a separate phase and is separated from the reaction by-product, aqueous solution of sodium chloride. Triethylamine borane can be dried to remove all or substantially all of the water and is reacted with sodium tetrahydroborate or other metal salt, such as sodium hydride, potassium hydride, lithium borohydride, and potassium borohydride or sodium alcoxide (e.g., at a temperature of about 180 to about 250 ° C) to produce Na2B12H12.

The ratio between Lewis base borane complex and metal salt is not critical to obtain detectable quantities of dodecahydrododecaborate anion. However, for increased yields of B12H12 (2-) the molar ratio between L.BH3 and the metal in the starting mixture is normally maintained to match the molar ratio between boron and metal in the desired product, metal salt of dodecahydroborate, M+(B12H12-)n, where n is metal valence and n is 1,2, 3. For example, if a metal salt comprises sodium hydride, an effective ratio between Lewis base borane complex and sodium hydride ranges from about 12 to about 2 according to the following equation:

$$12 \ L \cdot BH3 + 2 \ NaH \ \text{->} \ 2 \ Na2B12H12 + 12 \ L + 13 \ H2$$

In another example, if a metal salt comprises sodium tetrahydroborate, then an effective ratio between Lewis base and sodium tetrahydroborate is about 10 to about 2 according to the following equation:

$$10 \text{ L·BH3} + 2 \text{ NaBH}_4 \rightarrow 2 \text{ Na2B12H12} + 10 \text{ L} + 13 \text{ H2}$$

In another aspect of the instant invention metal tetrahydroborate salt is reacted with boroxines (e.g., at a temperature of about 80 to about 180 °C in the absence of air and moisture), to form salts of B12H12 (2-) and metal borates. Boroxines comprise cyclic boric acid esters of general formula B303(OR)3, where R is H or hydrocarbyl radical, such as alkyl, cycloalkyl, aryl, alkylaryl. For example, alkoxyboroxines are cyclic aikyi borate esters, where R is aikyi. The term "alkoxyboroxines" throughout this description refers to any liquid whose composition can be expressed in terms of B2O3 and trialkylborate content. Those compositions may be considered as a solution of boric oxide in the trialkyl borate in which the amount of boric oxide in solution may be varied. Any particular solution can be defined in that it contains only boron, oxygen and certain alkoxy groups and has certain boron content. Examples of useful boroxines used in this invention comprise alkoxyboroxines, where R is alkyl, including those where R is methyl, ethyl, propyl, butyl, isopropyl. Desirable results have been obtained from alkoxyboroxines (e.g, trimethoxyboroxine, B3O3(OCH3)3).

US Patent No. 2,927,124 (the disclosure of which is hereby incorporated by reference), describes a process for the preparation of boroxine, where boron oxide is reacted with trimethyl borate-methanol azeotrope as described by the following equation:

$$6 \text{ B}_2\text{O}_3 + 3 \text{ B(OMe}_3) \cdot \text{CH}_3\text{OH} \rightarrow 4 \text{ B}_3\text{O}_3\text{(OMe)}_3 + 3 \text{ HBO}_2$$

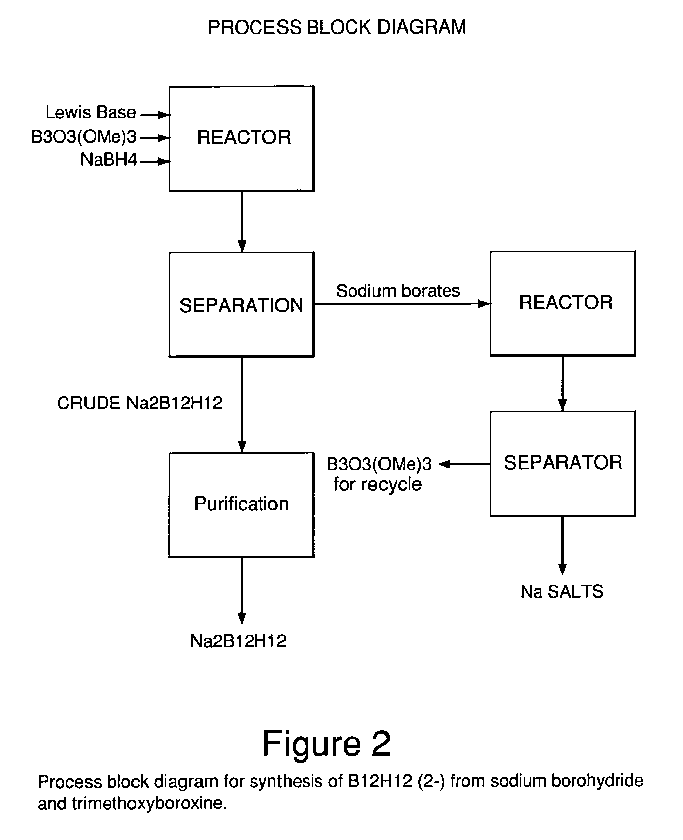

When trimethoxyboroxine is used for the synthesis of B12H12 (2-), this aspect of the inventive process is illustrated in Figure 2. Referring now to Figure 2, the process illustrated thereon is described by the following equation:

$$19 \text{ NaBH}_4 + 10 \text{ B}_3\text{O}_3\text{(OMe)}_3 \rightarrow 2 \text{ Na}_2\text{B}_{12}\text{H}_{12} + 15 \text{ NaBO}_2 + 10 \text{ B(OMe)}_3 + 26 \text{ H}_2$$

However, during the reaction higher polyborates $Na_2B_4O_7$ and $Na_2B_6O_9$ may also form:

$$19 \text{ NaBH}_4 + 17.5 \text{ B}_3\text{O}_3\text{(OMe)}_3 \rightarrow 2 \text{ Na}_2\text{B}_{12}\text{H}_{12} + 7.5 \text{ Na}_2\text{B}_4\text{O}_7 + 17.5 \text{ B(OMe)}_3 + 26 \text{ H}_2$$

$$19 \text{ NaBH}_4 + 25 \text{ B}_3\text{O}_3\text{(OMe)}_3 \rightarrow 2 \text{ Na}_2\text{B}_{12}\text{H}_{12} + 7.5 \text{ Na}_2\text{B}_6\text{O}_{10} + 25 \text{ B(OMe)}_3 + 26 \text{ H}_2$$

Upon reaction completion boron value from the crude reaction mixture can be recovered by treating the reaction mixture with methanol and an acid. For example, sodium borates can be converted to sodium carbonates and trimethyl borate by treatment the reaction mixture with methanol and carbon dioxide as described in the following equation:

$$\text{Na}_2\text{B}_4\text{O}_7 + 12 \text{ MeOH} + \text{CO}_2 \rightarrow 4 \text{ B(OMe)}_3 + \text{Na}_2\text{CO}_3 + 6 \text{ H}_2\text{O}$$

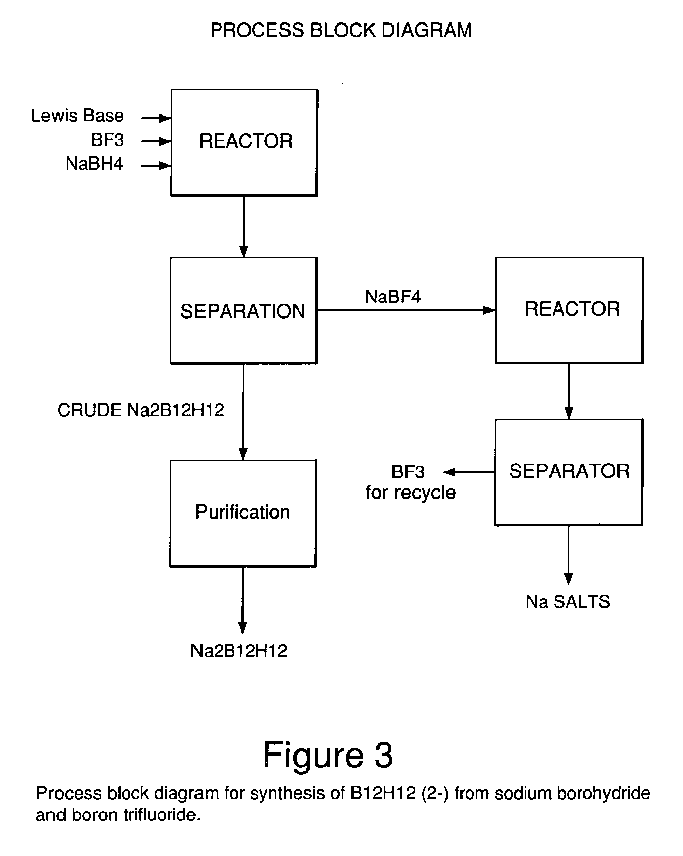

In another aspect of this invention, at least one metal tetrahydroborate is reacted with boron trifluoride or boron trifluoride complexes. The inventive process provides the advantage of producing B12H12 (2-) in one step from commercially available raw materials, such as sodium tetrahydroborate and boron trifluoride. This aspect of the invention is illustrated in Figure 3. Referring now to Figure 3, the process illustrated therein is described by the equation:

$$19 \text{ NaBH}_4 + 20 \text{ BF}_3 \rightarrow 2 \text{ Na}_2\text{B}_{12}\text{H}_{12} + 15 \text{ NaBF}_4 + 13 \text{ H}_2$$

This reaction can be conducted in an inert solvent, which can comprise ether type solvents, such as tetrahydrofuran, diethyl ether, glyme, diglyme, triglyme. Lewis bases, such as alkyl sulfides, trialkylamines and trialkylphosphines may be added to the reaction solution to improve the yield of B12H12 (2-). Boron trifluoride and sodium tetrahydroborate can be reacted at a temperature ranging from about — 50 to about 150 °C. If boron trifluoride is added to the sodium tetrahydroborate at a temperature below about 120 °C, then further heating of the reaction mixture (e.g., to a temperature of about 150 to about 180 °C), is useful to obtain higher yields of B12H12 (2-). It is usually not necessary to filter the reaction by-product NaBF4 after addition of boron trifluoride. However, to improve agitation of the reaction mixture under reaction conditions it may be beneficial to filter $NaBF_4$ after adding boron trifluoride. After filtering NaBF4, the reaction mixture can be heated (e.g., to a temperature of about 150 to about 180 °C), to obtain B12H12 (2-). In many cases it may be beneficial to recycle boron trifluoirde from NaBF4 to improve overall boron based yield. A convenient method for recycling boron trifluoride from NaBF4 is described by the following equation (Inorganic Synthesis, 1939, V1, Page 21 - the disclosure of which is hereby incorporated by reference):

$$6\ NaBF_4\ +\ B_2O_3\ +\ 6\ H_2SO_4\ \rightarrow\ 6\ NaHSO_4\ +\ 8\ BF_3\ +\ 3\ H_2O$$

Using this approach to recycle boron trifluoride from NaBF4 overall reaction for synthesis of Na2B12H12 may be described by the equation:

$$9.5\ NaBH_4\ +\ 1.25\ B_2O_3\ +\ 7.5\ H_2SO_4\ \rightarrow\ Na_2B_{12}H_{12}\ +\ 7.5\ NaHSO_4\ +\ 3.75\ H_2O\ +\ 13\ H_2$$

The following Examples are provided to illustrate certain aspects of the instant invention and shall not limit the scope of any claims appended hereto.

EXAMPLES

Example 1.

This example demonstrates preparing dodecahydroborate from sodium tetrahydroborate, boron trifluoride and dimethylsulfide.
A mixture of sodium tetrahydroborate (3.82 g), diglyme (50 ml) and dimethylsulfide (22 ml) was treated with boron trifluoride diethyl etherate (13.5 g) at 15 °C during one hour period. White precipitate was formed. The reaction mixture was heated 2 hours at 100 °C and then 3 hours at 150 °C resulted in the formation of B12H12 (2-). During the reaction evolution of gas was observed, which was accompanied by distillation of liquid (24.6 g), which was a mixture of dimethylsulfate and diethyl ether. The solid product was dissolved in ethanol and insoluble NaBF4 was filtered off. Ethanol was distilled out and solid residue was re-dissolved in water. Aqueous solution was treated with triethylammonium chloride and [Et3NH]2B12H12 was obtained with 87 % yield based on NaBH4.

Example 2.

This example demonstrates synthesis of B12H12 (2-) from sodium tetrahydroborate and trimethoxyboroxine.
The solution of 19 equiv. of $NaBH_4$ in diglyme was treated with 17.5 equiv. of boroxine at 110 °C and ~ 50 % of $NaBH_4$ was converted into $NaB_3H_8$. The reaction mixture was treated with excess of boroxine (boroxine/NaBH4 molar ratio was increased to 1.3) and - 90 % of $NaBH_4$ was converted into $NaB_3H_8$. Further heating reaction mixture at 145-150 °C resulted in the formation of $Na_2B_{12}H_{12}$ with 57 % isolated yield. The relatively low yield was due to the formation of small amount of diborane and other volatile boranes such as $BH(OMe)_2$ and $BH_2(OMe)$, which were absorbed by triethylamine and identified as triethylamine borane complexes.

Example 3.

This example demonstrates synthesis of B12H12 (2-) from sodium tetrahydroborate, trimethoxyboroxine., and tetrahydrothiophene.
The solution of 19 equiv. of $NaBH_4$ was treated with 17.5 equiv. of boroxine in diglyme in the presence of tetrahydrothiophene at 25 °C and - 50 % conversion of $NaBH_4$ to $C_4H_8SBH_3$ was observed. Heating of this mixture up to 140 °C and addition of excess 7.5 equiv. of boroxine resulted in the formation of $NaB_3H_8$ following by the formation of $Na_2B_{12}H_{12}$ with - 39 % yield.

Example 4.

This example demonstrates synthesis of borane triethylamine from sodium tetrahydroborate and triethylammonium chloride.

18.23 g of triethylammonium chloride were dissolved in 42.16 g of water. This aqueous solution of triethylammonium chloride was treated with 16.65 g of triethylamine. The mixture was treated under nitrogen atmosphere with 5.05 g of solid sodium borohydride at 30 °C during 45 min. The two phase mixture was formed with the top layer being a mixture of triethylamine and borane-triethylamine and bottom layer being aqueous solution of sodium chloride. The two phase mixture was separated and 30.76 g of organic layer was obtained. The organic fraction was analyzed by GC, $^1$H NMR and $^{11}$B and contained 1.84 g of water, 14.85 g of triethylamine and 14.00 g of triethylamine borane (92 % yield based on NaBH4). The organic fraction was dried over 1.94 g of solid NaOH for four hours.

Example 5.

This example demonstrates synthesis of borane triethylamine from sodium tetrahydroborate, triethylamine and sulfuric acid.

6.52 g of 96 % sulfuric acid were added to 85.33 g of water. This aqueous solution of sulfuric acid was treated with 40.13 g of triethylamine at 5 °C over 10 minutes to obtain aqueous solution of triethylammonium sulfate. The solution was treated under nitrogen atmosphere with 5.02 g of solid sodium borohydride at 30 °C during 40 min. The two phase mixture was formed with the top layer being a mixture of treiethylamine and borane-triethylamine and bottom layer being aqueous solution of sodium sulfate. The two phase mixture was separated and aqueous fraction was washed with 2.29 g of triethylamine. 44.2 g of organic fraction was obtained. This fraction was dried over 1.30 g of solid NaOH for four hours. The organic fraction was analyzed by GC, $^1$H NMR and $^{11}$B and contained 0.74 mol % of triethylamine (31.69 g) and 0.26 mol % of triethylamine borane (12.50 g) providing 82 % yield of triethylamine borane.

Example 6

This example demonstrates synthesis of borane triethylamine from sodium tetrahydroborate and triethylammonium chloride.

14.7 g of triethylammonium chloride were dissolved in 25.22 g of water. This aqueous solution of triethylammonium chloride was treated with 10.1 g of triethylamine. The mixture was treated under nitrogen atmosphere with 2.05 g of solid sodium borohydride at 30 °C during 2 min. The two phase mixture was formed with the top layer being a mixture of triethylamine and borane-triethylamine and bottom layer being aqueous solution of sodium chloride. The two phase mixture was separated and the aqueous fraction was washed with 2.01 g of triethylamine. 20.98 g of organic layer was collected, which was analyzed by GC, $^1$H NMR and $^{11}$B and contained 1.5 g of water, 13.3 g of triethylamine and 6.2 g of triethylamine borane (99 % yield based on NaBH4). The organic fraction was dried over 1.20 g of solid NaOH for four hours.

Example 7.

This example demonstrates synthesis of borane triethylamine from sodium tetrahydroborate and triethylammonium chloride.

18.23 g of triethylammonium chloride were dissolved in 42.16 g of water. This aqueous solution of triethylammonium chloride was treated with 16.65 g of triethylamine. The mixture was treated under nitrogen atmosphere with 5.05 g of solid sodium borohydride at 30 °C during 45 min. The two phase mixture was formed with the top layer being a mixture of treiethylamine and borane-triethylamine and bottom layer being aqueous solution of sodium chloride. The two phase mixture was separated and 30.76 g of organic layer was obtained. The organic fraction was analyzed by GC, $^1$H NMR and $^{11}$B and contained 1.84 g of water, 14.85 g of triethylamine and 14.00 g of triethylamine borane (92 % yield based on NaBH4). The organic fraction was dried over 1.94 g of solid NaOH for four hours.

Example 8.

This example demonstrates synthesis of borane triethylamine from sodium tetrahydroborate, triethylamine and sulfuric acid.

6.51 g of 96 % sulfuric acid were added to 86.54 g of water. This aqueous solution of sulfuric acid was treated with 25.08 g of triethylamine at 5 °C over 10 minutes to obtain aqueous solution of triethylammonium sulfate. This solution was treated under nitrogen atmosphere with 5.08 g of solid sodium borohydride at 30 °C during 42 min. The two phase mixture was formed with the top layer being a mixture of treiethylamine and borane-triethylamine and bottom layer being aqueous solution of sodium sulfate. The two phase mixture was separated and aqueous fraction was washed with 2.00 g of triethylamine. 26.8 g of organic layer was obtained. This fraction was dried over 1.03 g of solid NaOH for four hours. The organic fraction was analyzed by GC, $^1$H NMR and $^{11}$B and contained 0.49 mol % of triethylamine (13.23 g) and 0.51 mol % of borane-triethylamine (13.52 g) providing 88 % yield of borane-triethylamine.

Example 9.

This example demonstrates a process for synthesis of triethylammonium salt of dodecahydrododecaborate, [Et3NH]2B12H12, from triethylamine borane and sodium borohydride.

Borane triethylamine (75 ml, 58.7 g, 511.5 mmol,) was added to NaBH4 (2.2 g, 58.2 mmol, powder) in 250 ml flask, at 25 °C under nitrogen atmosphere. The temperature of the reaction mixture was raised to 190 °C within ~ 30-40 minutes. At this time evolution of hydrogen and condensation of triethylamine in the overhead condenser was observed. After 1.5 hours 35.3 g of Et3N was collected from the distillate (349.5 mmol, 68.3 % yield based on Et3NBH3). The reaction was cooled down to 50 °C and residual borane triethylamine was removed under vacuum. The solid was dried under vacuum at 100 °C for 1 hour and 12.4 g of Et3NBH3 was collected (108.0 mmol, 21 mol %). The product (dry solid) was treated with 50 ml of 1 % NaOH and two layers mixture is formed. The mixture was centrifuged and Et3NBH3 (3.4 g, 29.6 mmol, 5.7 % mol %) was collected from the top layer. Aqueous fraction was neutralized with 3 M HCl to pH = 5 and treated with 40 % aqueous solution of Et3NHCl (8.0 g). The precipitate (~ 95 % purity) was collected and dried under vacuum to obtain 7.8 g of (Et3NH)2B12H12 (77.5 % yield based on NaBH4, ~ 65 % yield based on reacted Et3NBH3).

Example 10.

This example demonstrates a process for synthesis of triethylammonium salt of dodecahydrododecaborate, [Et3NH]2B12H12, from triethylamine borane and sodium borohydride.

A mixture of triethylamine borane (72 mol %) and triethylamine (28 mol %) was prepared according to procedure described in the examples 1-3. This mixture was combined with 2.0 g of NaBH4 and heated to 120 °C. At this temperature 19 ml of triethylamine was distilled off. The mixture was heated to 200 C for one hour and 33 ml of triethylamine was distilled off accompanied by evolution of hydrogen gas. Unreacted borane triethylamine was removed under vacuum and 13.7 g of triethylamine borane was collected from the condensate. The product (dry solid) was treated with 50 ml of 1 % NaOH, neutralized with 1 M HCl to pH = 5 and treated with 40 % aqueous solution of Et3NHCl (7.5 g). The precipitate was formed, separated by filtration and and dried under vacuum to obtain 6.2 g of (Et3NH)2B12H12 (73 % yield based on NaBH4).

Although certain aspects of the invention are illustrated and described herein with reference to given embodiments, it is not intended that the appended claims be limited to the details shown. Rather, it is expected that various modifications may be made in these details by those skilled in the art, which modifications may still be within the spirit and scope of the claimed subject matter and it is intended that these claims be construed accordingly.

**Claims**

1. A process for producing salts of dodecahydrododecaborate (-2) comprising reacting at least one metal tetrahydroborate with at least one Bronsted or Lewis acid and with at least one Lewis Base

2. A process of claim 1 wherein the metal tetrahydroborate comprises at least one member selected from the group consisting of lithium tetrahydroborate, sodium tetrahydroborate and potassium tetrahydroborate, and alkali earth tetrahydroborate selcted from calcium tetrahydroborate, magnesium tetrahydroborate and combinations thereof.

3. A process of claim 1 wherein the Bronsted acid comprises at least one member selected from the from the group consisting of hydrochloric acid, sulfuric acid, acetic acid, formic acid, boric acid, trialkylammonium hydrogen chloride, trialkylammonium hydrogen sulfate, and combinations thereof.

4. A process of claim 1 wherein the Lewis acid comprises at least one member selected from the group consisting of aluminum trichloride, boron halides, carbon dioxide, boron esters, boron oxide, and mixtures of boron oxide with boron esters and combinations thereof.

**5.** A process of claim 4 wherein the Lewis acid comprises boron halide comprising boron trifluoride

**6.** A process of claim 1 wherein the Lewis acid comprises trimethylboroxine

**7.** A process of claim 1 wherein the Lewis Base comprises at least one ether type compounds of general formula RO (CH2CH2O)R', amines of general formula R'R''R'''N, alkyl sulfides of general formula R'SR'' and phospines of general formula RR'R''P

**8.** A process of claim 1 wherein the Lewis Base comprises triethylamine

**9.** A process of claim 1 wherein the Lewis Base comprises tetrahydrothiophene

**10.** A process of claim 1 wherein the sodium borohydride is reacted with at at least one boroxine in diglyme to form sodium dodecahydrododecaborate (-2)

**11.** A process of claim 10 wherein the boroxine is recycled from sodium borate by-products

**12.** A process of claim 1 wherein sodium borohydride is reacted with boron trifluoride combined with diglyme to form sodium dodecahydrododecaborate (-2)

**13.** A process of claim 2 wherein boron trifluoride is recycled from sodium tetrafluoroborate

**14.** A process of claim 1 wherein sodium borohydride is reacted with triethylammonium chloride to form sodium dodecahydrododecaborate (-2)

**15.** A process of claim 1 wherein sodium borohydride is reacted with triethylammonium sulfate to form sodium dodec-ahydrododecaborate (-2)

PROCESS BLOCK DIAGRAM

## Figure 1

Process block diagram for synthesis of B12H12 (2-) from sodium borohydride, triethylamine and hydrogen chloride.

PROCESS BLOCK DIAGRAM

# Figure 2

Process block diagram for synthesis of B12H12 (2-) from sodium borohydride and trimethoxyboroxine.

PROCESS BLOCK DIAGRAM

# Figure 3

Process block diagram for synthesis of B12H12 (2-) from sodium borohydride and boron trifluoride.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 69122205 P
- US 3169045 A
- US 3265737 A
- US 3328134 A
- US 3961017 A
- CZ 238254
- US 3355261 A, Miller, H.C.; Muetterties, E. L.
- US 2927124 A, Olmsted, P. B.
- US 20050064288 A1
- US 20050053841 A1

**Non-patent literature cited in the description**

- **GRUNER, B. et al.** *Eur. J. Solid State Inorg. Chem.,* 1991, 597
- **SIVAEV, I. B. ; BREGADZE, V.I. ; SJOBERG, S.** *Collect. Czech. Chem. Commun.,* 2002, vol. 679
- *Inorganic Synthesis,* 1939, vol. V1, 21